(19) Europäisches Patentamt
European Patent Office
Office européen des brevets

(11) **EP 4 746 103 A1**

(12) **EUROPEAN PATENT APPLICATION**
published in accordance with Art. 153(4) EPC

(43) Date of publication:
**20.05.2026 Bulletin 2026/21**

(21) Application number: 25748980.7

(22) Date of filing: **23.01.2025**

(51) International Patent Classification (IPC):
**H01M 10/058** (2010.01)    **H01M 4/525** (2010.01)
**H01M 4/505** (2010.01)    **H01M 4/583** (2010.01)
**H01M 10/052** (2010.01)    **H01M 4/02** (2006.01)

(52) Cooperative Patent Classification (CPC):
**H01M 4/02; H01M 4/505; H01M 4/525;**
**H01M 4/583; H01M 4/587; H01M 10/052;**
**H01M 10/0525; H01M 10/058; H01M 10/0587;**
**H01M 50/103; Y02E 60/10; Y02P 70/50**

(86) International application number:
**PCT/KR2025/001357**

(87) International publication number:
**WO 2025/165076 (07.08.2025 Gazette 2025/32)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **01.02.2024 KR 20240016255**

(71) Applicant: **LG Energy Solution, Ltd.**
**Seoul 07335 (KR)**

(72) Inventors:
 • **PARK, Jin Young**
  **Daejeon 34122 (KR)**

 • **PARK, Ji Min**
  **Daejeon 34122 (KR)**
 • **OH, Seok Jin**
  **Daejeon 34122 (KR)**
 • **SUNG, Joo Hwan**
  **Daejeon 34122 (KR)**
 • **YOUN, Hee Chang**
  **Daejeon 34122 (KR)**
 • **JUNG, Kyung Min**
  **Daejeon 34122 (KR)**

(74) Representative: **Plasseraud IP**
 **104 Rue de Richelieu**
 **CS92104**
 **75080 Paris Cedex 02 (FR)**

(54) **LITHIUM SECONDARY BATTERY**

(57)     The present invention relates to a lithium secondary battery including an electrode assembly including a positive electrode, a negative electrode, and a separator placed between the positive electrode and the negative electrode, an electrolyte, and a battery case including an internal space for accommodating the electrode assembly and the electrolyte, wherein the positive electrode includes a positive electrode active material, the positive electrode active material includes a lithium nickel-based oxide containing 50 mol% to 70 mol% of nickel among all metals excluding lithium, and an electrolyte filing factor (EFF) index (unit: g/Ah) defined by Equation 1 below is 1.82 to 2.06.

[Equation 1]

$$EFF = \frac{R_E \times S_U}{N_C}$$

In Equation 1 above, $R_E$ [unit: g] indicates a weight of residual electrolyte contained in a lithium secondary battery after activation, $S_U$ indicates a ratio ($S_A/S_E$) of a volume ($S_A$) of the electrode assembly and a volume ($S_E$) of the lithium secondary battery, and $N_C$ [unit: Ah] indicates a capacity when the lithium secondary battery is discharged from 4.4 V to 2.5 V at 0.33 C at 25 °C.

**Description**

**TECHNICAL FIELD**

**Cross-reference to Related Applications**

This application claims the benefit of Korean Patent Application No. 10-2024-0016255, filed on February 1, 2024, in the Korean Intellectual Property Office, the disclosure of which is incorporated herein in its entirety by reference.

**Technical Field**

The present invention relates to a lithium secondary battery, and more particularly, to a lithium secondary battery having high energy density and excellent high-temperature lifetime characteristics.

**BACKGROUND ART**

Lately, there has been a rising demand for high-capacity, high-output, and high-stability secondary batteries, driven by the fact that the application of lithium secondary batteries has rapidly expanded to power storage supply of large-area devices, such as automobiles and power storage systems, as well as power supply of electronic devices such as electrical, electronic, communication, and computer devices.

The lithium secondary batteries generally include a positive electrode containing a positive electrode active material, a negative electrode containing a negative electrode active material, an electrolyte serving as a medium for delivering lithium ions, and a separator. In this case, as the negative electrode active material, a carbon-based active material, a silicon-based active material, or the like may be used, and as the positive electrode active material, a lithium transition metal oxide such as lithium cobalt oxide, lithium nickel oxide, and lithium nickel-cobalt-manganese composite oxide may be used.

Meanwhile, recently, a lithium nickel-cobalt-manganese composite transition metal oxide having a nickel content of at least 80 mol% among metals excluding lithium as a positive electrode active material is mainly being studied for increasing the energy density of a positive electrode. However, when the nickel content in the lithium nickel-cobalt-manganese composite transition metal oxide is increased, the positive electrode active material undergoes rapid structural stability collapse at high temperatures, causing significant degradation in performance and reduced thermal stability.

To make sure that such an issue is prevented, an increase in driving voltage is needed to achieve the required energy density when lowering the nickel content in the lithium nickel-cobalt-manganese composite transition metal oxide, and upon this high-voltage driving, electrolyte side reactions at the positive electrode exacerbate and gas generation inside batteries increases.

Accordingly, there is a need to develop a lithium secondary battery exhibiting excellent energy density and thermal stability and permitting a reduction in electrolyte side reactions under the condition of high-voltage driving.

**DISCLOSURE OF THE INVENTION**

**TECHNICAL PROBLEM**

The present invention is designed to overcome the limitations described above, and thus an aspect of the present invention provides a lithium secondary battery exhibiting excellent high-temperature lifetime characteristics resulting from reduced electrolyte side reactions at high voltage, and excellent thermal stability of a positive electrode active material, while achieving high energy density.

**TECHNICAL SOLUTION**

[1] According to an aspect of the present invention, there is provided a lithium secondary battery including an electrode assembly including a positive electrode, a negative electrode, and a separator placed between the positive electrode and the negative electrode, an electrolyte, and a battery case accommodating the electrode assembly and the electrolyte, wherein the positive electrode includes a positive electrode active material, the positive electrode active material includes a lithium nickel-based oxide containing 50 mol% to 70 mol% of nickel among all metals excluding lithium, and an electrolyte filing factor (EFF) index (unit: g/Ah) defined by Equation 1 below is 1.82 to 2.06.

[Equation 1]

$$EFF = \frac{R_E \times S_U}{N_C}$$

In Equation 1 above, $R_E$ [unit: g] indicates a weight of residual electrolyte contained in a lithium secondary battery after activation, $S_U$ indicates a ratio ($S_A/S_E$) of a volume ($S_A$) of the electrode assembly and a volume ($S_E$) of the lithium secondary battery, and $N_C$ [unit: Ah] indicates a capacity when the lithium secondary battery is discharged from 4.4 V to 2.5 V at 0.33 C at 25 °C.

[2] The present invention provides the lithium secondary battery according to [1] above, wherein the $R_E$ is 265 to 295 g.

[3] The present invention provides the lithium secondary battery according to [1] or [2] above, wherein the $S_U$ is 0.70 to 0.95.

[4] The present invention provides the lithium secondary battery according to at least one of [1] to [3] above, wherein the $N_C$ is 90 to 150 Ah.

[5] The present invention provides the lithium secondary battery according to at least one of [1] to [4] above, wherein a ratio ($R_E/N_C$) [unit: g/Ah] of the $R_E$ to the $N_C$ is 2.00 to 3.30.

[6] The present invention provides the lithium secondary battery according to at least one of [1] to [5] above, wherein the volume ($S_A$) of the electrode assembly is 0.3 L to 1.35 L.

[7] The present invention provides the lithium secondary battery according to at least one of [1] to [6] above, wherein the volume ($S_E$) of the lithium secondary battery is 0.4 L to 1.5 L.

[8] The present invention provides the lithium secondary battery according to at least one of [1] to [7] above, wherein the lithium nickel-based oxide contains 15 mol% of cobalt (Co) or less among all metals except lithium.

[9] The present invention provides the lithium secondary battery according to at least one of [1] to [8] above, wherein the lithium nickel-based oxide is represented by Formula 1 below.

[Formula 1] $\quad\quad$ $Li_{1+a1}[Ni_{x1}Co_{y1}Mn_{z1}M^1_{w1}]O_2$

In Formula 1 above, $0 \leq a1 \leq 0.5$, $0.5 \leq x1 \leq 0.7$, $0 < y1 \leq 0.15$, $0 < z1 \leq 0.4$, and $0 \leq w1 \leq 0.2$ are satisfied, and $M^1$ is at least one doping element selected from W, Cu, Fe, V, Cr, Ti, Zr, Zn, Al, In, Ta, Y, La, Sr, Ga, Sc, Gd, Sm, Ca, Ce, Nb, Mg, B, and Mo.

[10] The present invention provides the lithium secondary battery according to at least one of [1] to [9] above, wherein the lithium nickel-based oxide is a single particle type particle.

[11] The present invention provides the lithium secondary battery according to at least one of [1] to [10] above, wherein the lithium secondary battery has a charge cut-off voltage of 4.3 V or greater.

[12] The present invention provides the lithium secondary battery according to at least one of [1] to [11] above, wherein the lithium secondary battery has a nominal voltage of 3.68 V or greater.

[13] The present invention provides the lithium secondary battery according to at least one of [1] to [12] above, wherein the negative electrode includes graphite as a negative electrode active material.

[14] The present invention provides the lithium secondary battery according to at least one of [1] to [13] above, wherein the battery case is a prismatic battery case.

[15] The present invention provides the lithium secondary battery according to at least one of [1] to [14] above, wherein the electrode assembly is formed in which a positive electrode, a separator, and a negative electrode are sequentially stacked and wound in one direction.

## ADVANTAGEOUS EFFECTS

According to the present invention, with a nickel content of 50 mol% to 70 mol% among all metals excluding lithium, a positive electrode active material has improved structural stability at high temperatures, resulting in excellent thermal stability, and with an appropriate adjustment of a weight of an electrolyte remaining after activation according to the structure and capacity of a lithium secondary battery, both reduction in gas generation inside the battery upon high-voltage driving and appropriate electrolyte impregnability may be achieved. Accordingly, a lithium secondary battery manufactured therethrough may be provided with high energy density, high capacity characteristics, excellent lifetime characteristics, and high-temperature lifetime characteristics.

## MODE FOR CARRYING OUT THE INVENTION

Hereinafter, the present invention will be described in detail.

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. The singular expressions "a", "an" and "the" are intended to include the plural forms as well, unless the context clearly indicates otherwise.

It will be further understood that the term "include", "comprise", or "have" used herein, specifies the presence of stated features, numbers, steps, elements, or combinations thereof, but does not preclude the presence or addition of one or more other features, numbers, steps, elements, or combinations thereof.

As used herein, the term "single particle type particle" indicates a particle formed of 30 or fewer sub-particles. The sub-particle unit constituting a single particle type particle is defined as a nodule. The single particle type particle includes a single particle formed of one single nodule or a quasi-single particle, a composite of 30 or fewer nodules

The term "nodule" indicates a sub-particle unit body constituting a single particle and a quasi-single particle, and the nodule may be a single crystal lacking any crystalline grain boundary, or may be a polycrystal in which grain boundaries are not present when observed in a field of view of $5000\times$ to $20000\times$ using a scanning electron microscope (SEM).

As used herein, the term "secondary particle" indicates a particle formed by aggregation of more than 30 sub-particles. To distinguish the term from the sub-particle forming a single particle type particle, each sub-particle unit forming the secondary particle is referred to as a "primary particle".

As used herein, when "particle" is described, any one or all of a single particle, a quasi-single particle, a primary particle, a nodule, and a secondary particle may be encompassed.

As used herein, the term "average particle size $D_{50}$" indicates a particle diameter at 50% of the volume accumulation in volume accumulated particle size distribution of powder to be measured, and may be measured using a laser diffraction method. For example, the average particle diameter D50 may be measured in a way that the target powder for measurement is dispersed in a dispersion medium, the dispersion medium is introduced into a commercial laser diffraction particle size measurement instrument (e.g., Microtrac MT 3000), and irradiated with ultrasonic waves having a frequency of about 28 kHz and an output of 60 W to obtain a volume accumulated particle size distribution graph, and the particle diameter at 50% of the volume accumulation is calculated.

The inventors conducted repeated research to develop a lithium secondary battery exhibiting excellent lifetime performance and storage performance at high temperatures and high voltages while achieving high capacity characteristics, and found that a lithium secondary battery would have excellent capacity characteristics, high voltage and high temperature lifetime characteristics, and storage characteristics along with improved electrolyte impregnability when nickel accounts for 50 mol% to 70 mol% out of all metals excluding lithium, and the structure and discharge capacity of the lithium secondary battery, and the weight of the electrolyte remaining after activation are adjusted to satisfy a specific formula and have thus completed the invention.

Hereinafter, the present invention will be described in detail.

A lithium secondary battery according to the present invention may include at least one of the following components, and may include any combination of technically feasible components among the following components.

### Lithium secondary battery

A lithium secondary battery according to the present invention includes an electrode assembly including a positive electrode, a negative electrode, and a separator placed between the positive electrode and the negative electrode, an electrolyte, and a battery case including an internal space for accommodating the electrode assembly and the electrolyte, wherein the positive electrode includes a positive electrode active material, the positive electrode active material includes a lithium nickel-based oxide containing 50 mol% to 70 mol% of nickel among all metals excluding lithium, and an electrolyte filing factor (EFF) index (unit: g/Ah) defined by Equation 1 below is 1.82 to 2.06.

[Equation 1]

$$EFF = \frac{R_E \times S_U}{N_C}$$

In Equation 1 above, $R_E$ [unit: g] indicates a weight of residual electrolyte contained in a lithium secondary battery after activation, $S_U$ indicates a ratio ($S_A/S_E$) of a volume ($S_A$) of the electrode assembly and a volume ($S_E$) of the lithium secondary battery, and $N_C$ [unit: Ah] indicates a capacity when the lithium secondary battery is discharged from 4.4 V to 2.5 V at 0.33 C at 25 °C.

The lithium secondary battery according to the present invention may have an EFF index (unit: g/Ah), defined by Equation 1, of 1.82 to 2.06, specifically, 1.82 or greater, 1.83 or greater, 1.84 or greater, 1.85 or greater, 1.86 or greater, 1.87 or greater, 1.88 or greater, 1.89 or greater, 1.90 or greater, 1.91 or greater, and may have an EFF index (unit: g/Ah) defined by Equation 1 of 2.06 or less, 2.05 or less, 2.04 or less, 2.03 or less, 2.02 or less, 2.01 or less, 2.00 or less, 1.99 or less, 1.98 or less, 1.97 or less, 1.96 or less, 1.95 or less, 1.94 or less, 1.93 or less, 1.92 or less, 1.91 or less. For example, the EFF index may be 1.82 to 2.06, 1.88 to 2.00, 1.89 to 1.96, and 1.90 to 1.94.

Recently, there was an effort to increase the energy density of a positive electrode by using lithium nickel-based oxide containing nickel, cobalt, and manganese and having a greater content of nickel, as a positive electrode active material to achieve the high capacity characteristics of lithium secondary batteries. However, when the nickel content of the lithium nickel-based oxide is increased, degradation in structural stability and chemical stability of the positive electrode active material is caused due to changes of $Ni^{2+}$ ions to $Ni^{4+}$ ions, and accordingly, side reactions with an electrolyte are accelerated, resulting in reduced lifetime characteristics, and this phenomenon is further accelerated when exposed to high temperatures, leading to significantly reduced thermal stability.

When the nickel content of the lithium nickel-based oxide is reduced, thermal stability at high temperatures may be improved, but in order to achieve the same level of energy density as the lithium nickel-based oxide containing a high nickel content, the lithium nickel-based oxide with a reduced nickel content needs to be driven at high voltages (e.g., 4.35 V or higher). However, when driven at such high voltages, oxygen desorption is caused due to changes in the oxidation number of nickel and cobalt, thereby exacerbating electrolyte side reactions and increasing gas generation, resulting in degradation in lifetime performance and storage performance.

Accordingly, the electrolyte injection amount needs to be reduced to decrease gas generation, but when the electrolyte injection amount is excessively reduced, electrolyte impregnation of an electrode deteriorates, causing an increase in mobility of lithium ions and an increase in cell resistance, and thus batteries may have rather reduced capacity and lifetime characteristics, and thus the electrolyte injection amount needs to be appropriately adjusted according to the characteristics of batteries.

Accordingly, the lithium secondary battery according to the present invention prevents the issues described above by adjusting the weight of an electrolyte remaining after activation to a specific condition based on the characteristics of the lithium secondary battery according to a ratio of the volume of the lithium secondary battery excluding a battery case and the volume of the lithium secondary battery, and discharge capacity of the lithium secondary battery.

Specifically, the lithium secondary battery according to the present invention may achieve high energy density and high capacity characteristics by adjusting the EFF index defined by Equation 1 above to be 1.82 to 2.06, and also may exhibit excellent thermal stability, reduced gas generation, and appropriate electrolyte impregnability, resulting in excellent high-temperature lifetime characteristics and high-temperature storage characteristics.

The $R_E$ indicates a weight of residual electrolyte contained in a lithium secondary battery after activation,

The residual electrolyte included in the lithium secondary battery indicates a total of the electrolyte impregnated in the internal pores of the electrode assembly and the electrolyte placed outside the electrode assembly in the internal space of the battery case.

The weight of the residual electrolyte contained in the lithium secondary battery after the activation may be different from the weight of the electrolyte initially injected into the battery case during the lithium secondary battery manufacturing process before activation.

The activation indicates a process of charging and/or discharging a lithium secondary battery manufactured but not yet charged or discharged to provide electrical characteristics, and forming a solid electrolyte interphase (SEI) film on an electrode to stabilize batteries, thereby making the batteries ready for actual use.

With respect to the $R_E$, the activation may be achieved by performing the process of charging the lithium secondary battery up to a voltage of 4.0 V or greater at 55 °C at least once.

Specifically, with respect to the $R_E$, the activation may be achieved by performing (1) charging the lithium secondary battery up to 4.0 V or an SOC of 3% under a constant current condition of 0.2 C at 55 °C, (2) charging the lithium secondary battery up to 4.35 V or an SOC of 17% under a constant current condition of 1.0 C at 55 °C, and (3) charging the lithium secondary battery up to 4.35 V or an SOC of 60% under a constant current condition of 1.0 C at 55 °C.

For example, the weight ($R_E$) of the residual electrolyte contained in the lithium secondary battery after the activation may be measured by (1) measuring a weight ($M_L$) of a lithium secondary battery after activation, which includes an electrode assembly, an electrolyte, and a battery case, where the battery case is sealed, (2) disassembling the lithium secondary battery to remove the electrolyte present in the battery case, (3) immersing the battery case and the electrode assembly in a dimethyl carbonate solvent to remove the electrolyte present on a surface of the battery case, a surface of the electrode assembly, and internal pores, and then drying the battery case and the electrode assembly, and (4) measuring a weight ($M_C$) of the dried battery case and a weight ($M_A$) of the dried electrode assembly, and then substituting the measured $M_L$, $M_C$, and $M_A$ into Equation A below.

[Equation A]

$$R_E = M_L - M_C - M_A$$

The $R_E$ may be 265 to 295 g, 267 to 290 g, more preferably 270 to 282 g, or 272 to 278 g. When the above range is satisfied, electrolyte side reactions are reduced, resulting in decreased gas generation and sufficient electrolyte impregnation, and thus sufficient mobility of lithium ions may be secured and excellent lifetime, output, and high-temperature storage characteristics may be achieved.

$S_U$ indicates a ratio ($S_A/S_E$) of a volume ($S_A$) of the electrode assembly and a volume ($S_E$) of the lithium secondary battery. The volume ($S_E$) of the lithium secondary battery is a volume calculated with respect to an external shape of the lithium secondary battery, and specifically indicates a volume of a space occupied by an external shape of the lithium secondary battery. In this case, the external shape of the lithium secondary battery may be the same as an external shape of the battery case when the battery case is sealed. The volume of the lithium secondary battery may be determined based on external dimensions of the lithium secondary battery, without considering the volume occupied by the components such as the electrolyte and electrode assembly accommodated inside the battery case, or the volume of pores.

When the battery case is a prismatic battery case, the volume ($S_E$) of the lithium secondary battery may be obtained according to Equation B below. The volume ($S_E$) of the lithium secondary battery according to Equation B below is obtained by assuming that the lithium secondary battery including the prismatic battery case has a rectangular parallelepiped shape.

$S_E$ = (Thickness of lithium secondary battery) × (Length of lithium secondary battery) × (Width of lithium secondary battery) [Equation B]

In Equation B above, the thickness of the lithium secondary battery may indicate a distance measured along a thickness direction of the lithium secondary battery with respect to an external shape of the lithium secondary battery.

In Equation B above, the length of the lithium secondary battery may indicate a distance measured along a length direction of the lithium secondary battery with respect to an external shape of the lithium secondary battery.

In Equation B above, the width of the lithium secondary battery may indicate a distance measured along a width direction of the lithium secondary battery with respect to an external shape of the lithium secondary battery.

The shape of the lithium secondary battery is not limited to the shape described above, and the lithium secondary battery may have any suitable shape. The volume of the lithium secondary battery may be determined through an appropriate measuring method according to the shape of the lithium secondary battery.

The volume ($S_A$) of the electrode assembly indicates a sum of the volumes occupied by the positive electrode, the negative electrode, and the separator. The volume of the electrode assembly may be regulated by controlling the porosity and loading amount of positive and negative electrodes, the N/P ratio which is a ratio of the negative electrode capacity to the positive electrode capacity, and the like, or by varying the type of a conductive material included in the positive and negative electrodes. The volume of the electrode assembly may be measured with respect to the external shape of the positive electrode, negative electrode, or separator, without excluding the volume of pores included in the positive electrode, negative electrode, or separator.

The volume ($S_A$) of the electrode assembly may be obtained through Equation C below.

$S_A$ = (volume of positive electrode) + (volume of negative electrode) + (volume of separator) [Equation C]

In Equation C above, the volume of the positive electrode, the volume of the negative electrode, and the volume of the separator may each be measured with respect to the external shape of the positive electrode, negative electrode, or separator, without considering the volume of pores included in the positive electrode, negative electrode, or separator.

The $S_U$ may be 0.70 to 0.95, 0.73 to 0.90, 0.75 to 0.85, or 0.77 to 0.82. When the above range is satisfied, the relative space utilization rate may be increased within the same capacity, thereby achieving high energy density, and gas generated due to electrolyte side reactions may be appropriately accommodated.

The volume ($S_E$) of the lithium secondary battery may be 0.4 L to 1.5 L, 0.5 L to 1.3 L, or 0.6 L to 1.1 L. When the above range is satisfied, the electrode assembly and the electrolyte may be sufficiently accommodated, and the value of $S_U$ may satisfy an appropriate range.

The volume ($S_A$) of the electrode assembly may be 0.3 L to 1.35 L, 0.4 L to 1.2 L, or 0.5 to 1 L. When the above range is satisfied, excellent energy density may be achieved, and the value of $S_U$ may satisfy an appropriate range.

The $N_C$ indicates a capacity when the lithium secondary battery is discharged from 4.4 V to 2.5 V at 0.33 C at 25 °C.

Specifically, the $N_C$ may refer to a capacity when the lithium secondary battery is activated, charged at 25 °C and discharged from 4.4 V to 2.5 V at 0.33 C, indicating specifically a discharge capacity when the first charge/discharge is performed after activation. With respect to the $N_C$, the charging in the first charge/discharge after the activation may be performed by charging the lithium secondary battery at a C-rate of 0.33 C at 25 °C up to 4.35 V from 2.5 V.

With respect to the $N_C$, the activation may be performed by charging a lithium secondary battery, which is manufactured but not yet charged or discharged, at 25 °C at a constant current/constant voltage condition of 0.33 C up to 4.35 V with a 0.05 C cut, and discharging the lithium secondary battery at a constant current condition of 0.33 C up to 2.0 V.

The $N_C$ may be 90 to 150 Ah, 100 to 140 Ah, 105 to 130 Ah, or 110 to 120 Ah. When the above range is satisfied, high capacity characteristics may be achieved.

A ratio ($R_E/N_C$) [unit: g/Ah] of the weight ($R_E$) of the residual electrolyte included in the lithium secondary battery after activation to the capacity ($N_C$) when the lithium secondary battery is discharged from 4.4 V to 2.5 V at 0.33 C at 25 °C may be 2.00 to 3.30. Specifically, the $R_E/N_C$ [unit: g/Ah] may be 2.05 or greater, 2.07 or greater, 2.10 or greater, 2.13 or greater, 2.15 or greater, 2.17 or greater, 2.20 or greater, 2.23 or greater, 2.25 or greater, 2.27 or greater, or 2.30 or greater, and may be 3.30 or less, 3.10 or less, 3.00 or less, 2.90 or less, 2.80 or less, 2.70 or less, 2.60 or less, 2.55 or less, 2.50 or less, 2.45 or less, or 2.40 or less. For example, the $R_E/N_C$ [unit: g/Ah] may be 2.00 to 3.30, 2.15 to 2.90, 2.23 to 2.55, or 2.30 to 2.40. When the above range is satisfied, the effects of reducing gas generation and improving electrolyte impregnation may be maximized according to the battery design.

Hereinafter, each component of the lithium secondary battery according to the present invention will be described in detail.

The lithium secondary battery according to the present invention includes an electrode assembly including a positive electrode, a negative electrode, and a separator placed between the positive electrode and the negative electrode; an electrolyte; and a battery case accommodating the electrode assembly and the electrolyte.

(1) Electrode assembly

The electrode assembly according to the present invention includes a positive electrode, a negative electrode, and a separator placed between the positive electrode and the negative electrode.

Specifically, the electrode assembly may be formed by sequentially stacking the positive electrode, the separator, and the negative electrode, and the positive electrode and the negative electrode may be mutually insulated by the separator.

Types of the electrode assembly may include a stack type, a jelly roll type, and a stack and folding type, but are not limited thereto.

Preferably, the type of the electrode assembly may be a jelly roll type, and the electrode assembly may be formed in which a positive electrode, a separator, and a negative electrode are sequentially stacked and wound in one direction, specifically, in which a plurality of positive electrodes, separators, and negative electrodes may be alternately stacked and wound in one direction.

Hereinafter, each component of the electrode assembly according to the present invention will be described in detail.

1) Positive electrode

The positive electrode includes a positive electrode active material. Specifically, the positive electrode may include a positive electrode current collector and a positive electrode active material layer placed on the positive electrode current collector, and the positive electrode active material layer may include a positive electrode active material.

As the positive electrode current collector, various positive electrode current collectors known in the art may be used. For example, stainless steel, aluminum, nickel, titanium, fired carbon, or aluminum or stainless steel that is surface-treated with one of carbon, nickel, titanium, silver, or the like may be used as the positive electrode current collector. The positive electrode current collector may typically have a thickness of 3 to 500 μm, and fine irregularities may be formed on a surface of the positive electrode current collector to enhance adhesion of the positive electrode active material. For example, the positive electrode current collector may be used in various forms such as a film, a sheet, a foil, a net, a porous body, a foam body, and a non-woven fabric body.

The positive electrode active material layer may be placed on the positive electrode current collector, and may specifically be placed on one surface or both surfaces of the positive electrode current collector. The positive electrode active material layer may have a single-layer structure or a multi-layer structure of two or more layers.

The positive electrode active material includes a lithium nickel-based oxide containing nickel in an amount of 50 mol% to 70 mol%, 52 mol% to 68 mol%, 55 mol% to 65 mol%, or 57 mol% to 63 mol%, with respect to all metals excluding lithium. In this case, the positive electrode active material is superior to the positive electrode active material including lithium nickel-based oxide containing a high nickel content in structural stability and chemical stability at high temperatures, resulting in excellent thermal stability, and gas generation and swelling caused by residual lithium byproducts (LiOH, $Li_2CO_3$, or the like) present on a surface of the positive electrode active material may be mitigated, leading to excellent lifetime characteristics.

The lithium nickel-based oxide may contain cobalt (Co) in an amount of 15 mol% or less, 5 mol% to 15 mol%, 7 mol% to 13 mol%, or 8 mol% to 12 mol%, with respect to all metals excluding lithium. When cobalt is included in the above range, with a lower Co content, cost savings as well as improved resistance characteristics and output characteristics may be achieved.

Specifically, the lithium nickel-based oxide may be represented by Formula 1 below.

$$[\text{Formula 1}] \qquad Li_{1+a1}[Ni_{x1}Co_{y1}Mn_{z1}M^1_{w1}]O_2$$

In Formula 1 above, $M^1$ corresponds to a doping element that may or may not be optionally included in the lithium nickel-based oxide. $M^1$ may be at least one doping element selected from W, Cu, Fe, V, Cr, Ti, Zr, Zn, Al, In, Ta, Y, La, Sr, Ga, Sc, Gd, Sm, Ca, Ce, Nb, Mg, B, and Mo, or may be at least one doping element selected from the group consisting of W, Y, Ba, Ca, Ti, Mg, Ta, and Nb. When the doping element is included, particle growth during firing of the positive electrode active material may be facilitated or crystal structure stability may be improved.

In Formula 1 above, 1+a1 may indicate a molar ratio of lithium (Li) in the lithium nickel-based oxide, and may satisfy $0 \leq a1 \leq 0.5$, $0 \leq a1 \leq 0.2$, or $0 \leq a1 \leq 0.1$. When the above range is satisfied, the positive electrode active material may form a stable layered crystal structure.

In Formula 1 above, x1 may indicate a molar ratio of nickel to all metals excluding lithium in the lithium nickel-based oxide particles, and may satisfy $0.5 \leq x1 \leq 0.7$, $0.52 \leq x1 \leq 0.68$, $0.55 \leq x1 \leq 0.65$, or $0.57 \leq x1 \leq 0.63$. When the above range is satisfied, the resulting lithium secondary battery may be superior in high-temperature storage characteristics, high-temperature lifetime characteristics, and thermal stability.

In Formula 1 above, y1 may indicate a molar ratio of cobalt to all metals excluding lithium in the lithium nickel-based oxide particles, and may satisfy $0 < y1 \leq 0.15$ or $0 < y1 \leq 0.10$ or $0 < y1 \leq 0.07$. When the above range is satisfied, with a reduction in Co content, cost savings, good resistance characteristics, and output characteristics may be achieved, and with a relative increase in ratio of Mn, the positive electrode active material may have improved structural stability.

In Formula 1 above, z1 may indicate a molar ratio of manganese to all metals excluding lithium in the lithium nickel-based oxide particles, and may satisfy $0 < z1 \leq 0.4$, $0.1 \leq z1 \leq 0.4$, $0.15 \leq z1 \leq 0.4$, or $0.2 \leq z1 \leq 0.4$. When the above range is satisfied, the positive electrode active material may have improved structural stability.

w1 above represents a mole ratio of $M^1$ to all metals excluding lithium in the lithium nickel-based oxide and may satisfy $0 \leq w1 \leq 0.2$, $0 \leq w1 \leq 0.15$, or $0 \leq w1 \leq 0.1$. When the above range is satisfied, particle growth during firing of the positive electrode active material may be facilitated or crystal structure stability may be improved.

In addition, the lithium nickel-based oxide may be a single particle type particle.

Specifically, when the lithium nickel-based oxide is a secondary particle, particle breakage increases during electrode manufacturing, and internal cracks are caused due to volume expansion/contraction of primary particles during charge/discharge, which may reduce the effect of improving high-temperature lifetime characteristics and high-temperature storage characteristics.

Accordingly, when the lithium nickel oxide, which is a single particle type particle as described above, is used, particles are less broken in rolling since the lithium nickel oxide has higher particle strength than a typical lithium nickel-based oxide in the form of a secondary particle in which more than 30 primary particles are aggregated. In addition, since the lithium nickel oxide according to the present invention, which is a single particle type particle, has a small number of primary particles constituting particles, changes resulting from the volume expansion/contraction of primary particles during charge and discharge are small, and accordingly, the generation of cracks inside the particles is substantially reduced.

Therefore, the lithium secondary battery according to the present invention uses the lithium nickel-based oxide, which is a single particle type particle, and may thus have excellent thermal stability resulting from reduced particle breakage and internal particle cracking during charge and discharge, resulting in improved high-temperature lifetime characteristics and high-temperature storage characteristics.

Meanwhile, the positive electrode active material may have an average particle diameter ($D_{50}$) of 1 $\mu$m to 8 $\mu$m, 2 $\mu$m to 7 $\mu$m, 2.5 $\mu$m to 6 $\mu$m, 3 $\mu$m to 5 $\mu$m, or 3.5 $\mu$m to 4.5 $\mu$m. When the above range is satisfied, side reactions with an electrolyte may be minimized while an increase in resistance and degradation in output characteristics are prevented, and thus high-temperature lifetime characteristics and high-temperature storage characteristics may be excellent.

The positive electrode active material layer may include the positive electrode active material in an amount of 90 wt% to 99 wt%, 92 wt% to 99 wt%, or 94 wt% to 98 wt%. When the above range is satisfied, the lithium secondary battery may have improved energy density and capacity characteristics.

Meanwhile, the positive electrode active material layer may further include at least one of a positive electrode conductive material or a positive electrode binder optionally.

The positive electrode conductive material is used to impart conductivity to an electrode, and any positive electrode conductive material may be used without particular limitation as long as it has electron conductivity without causing chemical changes in batteries to be constituted. Specific examples thereof may include graphite such as natural graphite or artificial graphite; a carbon-based material such as carbon black, acetylene black, Ketjen black, channel black, furnace black, lamp black, thermal black, carbon fibers, and carbon nanotubes; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The positive electrode conductive material may typically be included in an amount of 0.1 wt% to 30 wt%, 0.3 wt% to 20 wt%, 0.5 wt% to 10 wt%, 0.7 wt% to 5 wt%, or 1 wt% to 3 wt%, with respect to the total weight of the positive electrode active material layer.

The positive electrode binder serves to improve the bonding between positive electrode material particles and the adhesion between a positive electrode material and a positive electrode current collector, and specific examples of the positive electrode binder may be fluorine resin-based binders including polyvinylidene fluoride (PVDF) or polytetrafluoroethylene (PTFE); rubber-based binders including styrene butadiene rubber (SBR), acrylonitrile-butadiene rubber, and styrene-isoprene rubber; cellulose-based binders including carboxyl methyl cellulose (CMC), starch, hydroxy propyl cellulose, and regenerated cellulose; polyalcohol-based binders including polyvinyl alcohol; polyolefin-based binders including polyethylene and polypropylene; polyimide-based binders; polyester-based binders; and silane-based binders, and any one thereof or a mixture of two or more thereof may be used. The positive electrode binder may be included in an amount of 0.1 wt% to 30 wt%, 0.3 wt% to 20 wt%, 0.5 wt% to 10 wt%, 0.7 wt% to 5 wt%, or 1 wt% to 3 wt%, with respect to the total weight of the positive electrode active material layer.

Meanwhile, the positive electrode may be prepared by applying a positive electrode slurry onto one side or both sides of a long sheet-shaped positive electrode current collector, removing a solvent of the positive electrode slurry through a drying process, and then rolling. Meanwhile, a positive electrode including a non-coating portion may be prepared by not applying a positive electrode slurry onto a portion of a positive electrode current collector, for example, one end of the positive electrode current collector, when applying the positive electrode slurry.

In addition, the positive electrode slurry may be prepared by dispersing a positive electrode active material in a solvent such as dimethyl sulfoxide (DMSO), isopropyl alcohol, N-methylpyrrolidone (NMP), acetone, or water.

2) Negative electrode

The negative electrode may include a positive electrode active material. Specifically, the negative electrode may include a negative electrode current collector and a negative electrode active material layer placed on the negative electrode current collector, and the negative electrode active material layer may include a negative electrode active material.

The negative electrode current collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, and the like, an aluminum-cadmium alloy, and the like may be used. The negative electrode current collector may generally have a thickness of 3 μm to 500 μm.

In addition, the negative electrode current collector, like the positive electrode current collector, may have fine irregularities formed on a surface thereof to improve bonding strength of a negative electrode active material. For example, the current collector may be used in various forms such as a film, a sheet, a foil, a net, a porous body, a foam body, and a non-woven fabric body.

The negative electrode active material layer may be placed on the negative electrode current collector, and may specifically be placed on one surface or both surfaces of the negative electrode current collector. The negative electrode active material layer may have a single-layer structure or a multi-layer structure of two or more layers.

The negative electrode may include graphite as a negative electrode active material. In this case, the negative electrode active material has smaller change in volume during charge and discharge than a silicon-based active material, and may thus have excellent lifetime characteristics.

Specifically, the graphite may be at least one selected from the group consisting of artificial graphite and natural graphite, and preferably may be a combination of artificial graphite and natural graphite.

When the negative electrode includes artificial graphite and natural graphite, the artificial graphite and the natural graphite may be included in a weight ratio of 6.5:3.5 to 9.5:0.5, 7:3 to 9:1, or 7.5:2.5 to 8.5:1.5. When the above range is satisfied, capacity characteristics may be improved while output characteristics and lifespan characteristics may be excellent.

The negative electrode active material may be included in an amount of 80 wt% to 99 wt%, 85 wt% to 98 wt%, or 90 wt% to 97 wt%, with respect to the total weight of the negative electrode active material layer. When the above range is satisfied, sufficient capacity characteristics may be achieved.

Meanwhile, the negative electrode active material layer may further include a negative electrode conductive material and a negative electrode binder optionally, in addition to the negative electrode active material.

The negative electrode conductive material is used to impart conductivity to an electrode, and any negative electrode conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fibers, and carbon nanotubes; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The negative electrode conductive material may typically be included in an amount of 0.1 wt% to 20 wt%, 0.2 wt% to 10 wt%, 0.3 wt% to 5 wt%, or 0.4 wt% to 2 wt%, with respect to the total weight of the negative electrode active material layer.

The negative electrode binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber(EPDM rubber), a sulfonated EPDM, styrene-butadiene rubber (SBR), fluorine rubber, or various copolymers thereof, and any one thereof or a mixture of two or more thereof may be used. The negative electrode binder may be included in an amount of 0.1 wt% to 30 wt%, 0.3 wt% to 20 wt%, 0.5 wt% to 10 wt%, 0.7 wt% to 5 wt%, or 1 wt% to 3 wt%, with respect to the total weight of the negative electrode active material layer.

The negative electrode active material layer may optionally further include a thickener. Any thickener used in typical lithium secondary batteries may be used as the thickener, and an example thereof is carboxymethyl cellulose (CMC). The thickener may be included in an amount of 0.1 wt% to 10 wt%, 0.3 wt% to 8 wt%, 0.5 wt% to 5 wt%, 0.7 wt% to 3 wt%, or 1 wt% to 2 wt%, with respect to the total weight of the negative electrode active material layer.

The negative electrode may be prepared according to a typical method for manufacturing a negative electrode. For example, the negative electrode active material, the negative electrode conductive material, and/or the negative electrode conductive material may be mixed in a negative electrode solvent to prepare a positive electrode slurry, and the negative electrode slurry may be applied onto a negative electrode current collector, and then dried and rolled to prepare the negative electrode.

The negative electrode solvent may include at least one selected from the group consisting of distilled water, ethanol, methanol, and isopropyl alcohol, preferably distilled water, in terms of facilitating the dispersion of components of the negative electrode slurry.

The negative electrode slurry may have a solid content of 30 wt% to 80 wt%, specifically 40 wt% to 70 wt%.

Alternatively, the negative electrode may be prepared by casting a separate support with the negative electrode slurry and then laminating the negative electrode current collector with a film separated from the support.

3) Separator

The separator may be placed between the positive electrode and the negative electrode.

The separator is placed between the positive electrode and the negative electrode, and thus serves to separate the negative electrode and the positive electrode and provide a passage for lithium ion migration, and any separator commonly used in lithium secondary batteries may be used without particular limitation. Specifically, as the separator, a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a stack structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength.

(2) Electrolyte

The electrolyte according to the present invention may include a lithium salt and an organic solvent.

Any compound may be used as the lithium salt without particular limitation as long as it is a compound capable of providing lithium ions used in lithium secondary batteries. Specifically, the lithium salt may include at least one selected from the group consisting of $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$,

LiN(C$_2$F$_5$SO$_2$)$_2$, LiN(CF$_3$SO$_2$)$_2$. LiCl, LiI, or LiB(C$_2$O$_4$)$_2$, preferably LiPF$_6$.

The lithium salt may be present in a concentration range of 0.1 M to 3.0 M, preferably 0.1 M to 2.0 M, and more preferably 0.5 M to 1.5 M. When the concentration of the lithium salt is included within the above range, the electrolyte has suitable conductivity and viscosity and may thus exhibit excellent performance, and lithium ions may effectively move.

An organic solvent is a non-aqueous solvent commonly used in lithium secondary batteries, and is not particularly limited as long as its decomposition due to an oxidation reaction or the like may be minimized in the charging/discharging process of secondary batteries.

Specifically, the organic solvent may include at least one selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixture thereof.

The cyclic carbonate-based organic solvent is an organic solvent which may well dissociate lithium salt in an electrolyte due to high dielectric constant as a highly viscous organic solvent, and specifically, may be a non-fluorinated saturated cyclic carbonate-based organic solvent. The cyclic carbonate-based organic solvent may include at least one organic solvent selected from the group consisting of ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate, and may more specifically include at least one selected from the group consisting of ethylene carbonate (EC) and fluoroethylene carbonate (FEC), and may even more specifically include ethylene carbonate (EC).

In addition, the linear carbonate-based organic solvent is an organic solvent having low viscosity and low dielectric constant, and may specifically be a non-fluorinated linear carbonate. The linear carbonate-based organic solvent may include at least one selected from the group consisting of dimethyl carbonate (DMC), diethyl carbonate (DEC), dipropyl carbonate, ethylmethyl carbonate (EMC), methylpropyl carbonate, and ethylpropyl carbonate, and may more specifically include at least one selected from the group consisting of ethylmethyl carbonate (EMC) and diethyl carbonate (DEC), and may more specifically include ethylmethyl carbonate (EMC).

The organic solvent may be a mixture of a cyclic carbonate-based organic solvent and a linear carbonate-based organic solvent. In this case, the cyclic carbonate-based organic solvent and the linear carbonate-based organic solvent may be mixed in a volume ratio of 5:95 to 40:60, 10:90 to 38:62, or 25:75 to 35:65. When the mixing ratio of the cyclic carbonate-based organic solvent and the linear carbonate-based organic solvent satisfies the above range, both high dielectric constant and low viscosity are satisfied, and excellent ionic conductivity may be achieved.

In addition, in order to prepare an electrolyte having high ionic conductivity, the organic solvent may further include at least one ester-based organic solvent selected from the group consisting of a linear ester-based organic solvent and a cyclic ester-based organic solvent, along with at least one carbonate-based organic solvent selected from the group consisting of the cyclic carbonate-based organic solvent and the linear carbonate-based organic solvent.

The linear ester-based organic solvent may specifically include at least one selected from the group consisting of methyl acetate, ethyl acetate, propyl acetate, methyl propionate, ethyl propionate, propyl propionate, and butyl propionate.

In addition, the cyclic ester-based solvent may specifically include at least one selected from the group consisting of γ-butyrolactone, γ-valerolactone, γ-caprolactone, σ-valerolactone, and ε-caprolactone.

Meanwhile, the organic solvent may be used by adding an organic solvent commonly used in a non-aqueous electrolyte without limitation, when needed. For example, at least one organic solvent selected from an ether-based organic solvent, a glyme-based solvent, and a nitrile-based organic solvent may be further included.

As the ether-based solvent, any one selected from the group consisting of dimethyl ether, diethyl ether, dipropyl ether, methylethyl ether, methylpropyl ether, ethylpropyl ether, 1,3-dioxolane (DOL), and 2,2-bis(trifluoromethyl)-1,3-dioxolane (TFDOL), or a mixture of two or more thereof may be used, but is the embodiment is not limited thereto.

The glyme-based solvent, as a solvent having higher dielectric constant and a lower surface tension than a linear carbonate-based organic solvent, and being less reactive with metal, may include at least one selected from the group consisting of dimethoxyethane (glyme, DME), diethoxyethane, digylme, tri-glyme, and tetra-glyme (TEGDME), but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, and the like, but is not limited thereto.

Meanwhile, in addition to the electrolyte constituents, the electrolyte may also further include an additive for improving lifetime characteristics of batteries, preventing reduction in battery capacity, and increasing battery discharge capacity.

The additive may include at least one additive selected from the group consisting of a non-fluorinated unsaturated cyclic carbonate-based compound, a halogen-substituted carbonate-based compound, a sultone-based compound, a sulfate-based compound, a borate-based compound, a nitrile-based compound, a benzene-based compound, an amine-based compound, a silane-based compound, and a lithium salt-based compound different from the lithium salt contained in the electrolyte.

Specifically, the additive may be one or more compounds selected from the group consisting of vinylene carbonate (VC), vinylethylene carbonate, fluoroethylene carbonate (FEC), 1,3-propane sultone (PS), 1,4-butane sultone, ethene sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, $LiN(SO_2F)_2$ (lithium bis(fluorosulfonyl)imide, LiFSI), $LiN(SO_2CF_3)_2$ (lithium bis(trifluoromethane sulfonyl) imide, LiTFSI), $LiPO_2F_2$, LiODFB, $LiB(C_2O_4)_2$ (lithium bisoxalatoborate, LiBOB), and $LiBF_4$.

The additive may be included in an amount of 0.01 wt% to 20 wt% or 0.05 wt% to 5.0 wt%, with respect to the total weight of the electrolyte. When the above range is satisfied, the low-temperature output, the high-temperature storage characteristics, and the high-temperature life characteristics of batteries may be improved, side reactions in the electrolyte may be reduced, and the presence of the additives as unreacted materials may be suppressed.

(3) Battery case

The battery case may serve to accommodate an electrode assembly and an electrolyte.

Specifically, the battery case is designed to accommodate an electrode assembly, injecting an electrolyte, and then seal the component, and is made from a material having a predetermined flexibility to form an accommodation portion, and may preferably be a cylindrical type, a coin type, a prismatic type, or a pouch type, but is not limited thereto. An upper case and a lower case constituting the battery case may be independent members, or may be substantially a single-body member with one end connected. The external form of the battery case may be produced using a variety of methods without limitation in the present invention.

For example, the battery case may be a prismatic battery case. The prismatic battery case, shaped like a metal can, allows for high-density stacking and has a narrow width compared to its length.

The prismatic battery case has an opening formed at an upper end, and may be made of a conductive metal material such as aluminum or steel, and the prismatic battery case may accommodate an electrode assembly and an electrolyte in an internal space through the upper opening of the battery can, and a top cap may be welded to the upper opening to seal the battery case.

Meanwhile, the lithium secondary battery of the present invention may have a charge cut-off voltage of 4.3 V or greater, specifically 4.35 V or greater, and more specifically 4.4 V or greater. In this case, excellent energy density equivalent to that of a positive electrode active material with a high nickel content, along with improved high-temperature lifetime performance and high-temperature storage performance is achievable.

Meanwhile, the lithium secondary battery may have a nominal voltage of 3.68 V or greater, preferably 3.68 V to 3.80 V, and more preferably 3.69 V to 3.75 V. In this case, the nominal voltage indicates an average voltage value upon discharge of the lithium secondary battery. Since the energy density of the lithium secondary battery is calculated by the product of average voltage and average current upon discharge, energy density increases when the nominal voltage is high. The nominal voltage of a lithium secondary battery using a typical lithium nickel cobalt manganese-based oxide as a positive electrode active material was 3.6 V, but in the present invention, the charge cut-off voltage was increased to set the nominal voltage to be 3.68 V or greater so as to achieve high energy density.

The lithium secondary battery according to the present invention is useful in portable devices such as a mobile phone, a laptop computer, and a digital camera, and to electric cars such as a hybrid electric vehicle (HEV).

In addition, a battery module or pack including the lithium secondary battery described above as a unit cell may be used as a power source of one or more medium-and-large-sized devices, for example, a power tool, an electric car such as an electric vehicle (EV), a hybrid electric vehicle (HEV), and a plug-in hybrid electric vehicle (PHEV), or a power storage system.

The lithium secondary battery according to the present invention may be used in a battery cell which is used as a power source for a small-sized device, and may also be preferably used as a unit cell for a medium- and large-sized battery module including a plurality of battery cells.

Examples of the medium-to-large devices include electric vehicles, hybrid electric vehicles, plug-in hybrid electric vehicles, and energy storage systems (ESS), but are not limited thereto.

Examples and Comparative Examples

Example 1

<Preparation of electrode assembly>

A positive electrode active material, a binder, and a conductive material were mixed in a weight ratio of 97:1.8:1.2 in an N-methylpyrrolidone solvent to prepare a positive electrode slurry. Thereafter, the positive electrode slurry was applied onto one surface of an aluminum current collector having a thickness of 12 $\mu$m, dried, and rolled to prepare a positive electrode. In this case, the positive electrode active material was Li[Ni$_{0.6}$Co$_{0.1}$Mn$_{0.3}$]O$_2$, the binder was PVDF, and the conductive material was carbon nanotubes.

A negative electrode active material, a binder, a conductive material, and a thickener were mixed in distilled water in a weight ratio of 96.15:2.3:0.5:1.05 to prepare a negative electrode slurry. Thereafter, the negative electrode slurry was applied onto one surface of a copper current collector having a thickness of 7.8 $\mu$m, dried, and rolled to have a porosity of 30%, thereby preparing a negative electrode. In this case, the negative electrode active material was artificial graphite and natural graphite, the binder was styrene-butadiene rubber (SBR), the conductive material was Super C65, and the thickener was carboxymethyl cellulose (CMC).

A porous polyethylene separator was placed between the negative electrode and positive electrode prepared above to prepare an electrode assembly.

In this case, the positive electrode had a porosity 21.35% and a loading amount of 4.03 mAh/cm$^2$, and the negative electrode had a porosity of 28.01%. In this case, the positive electrode and the negative electrode are present at an N/P ratio of 107.26, and the electrode assembly has a jelly-roll type in which a positive electrode, a separator, and a negative electrode are sequentially stacked and wound.

<Preparation of electrolyte>

As additives, 0.5 wt% of vinylene carbonate (VC), 0.5 wt% of propane sultone (PS), 1 wt% of ethylene sulfate (ESa), 1 wt% of lithium difluorophosphate, and 0.2 wt% of LiBF$_4$ were added to a mixed solvent containing ethylene carbonate (EC) and ethyl methyl carbonate (EMC) in a volume ratio of 3:7, and then 1.0 M of LiPF$_6$ was added to prepare an electrolyte.

<Manufacture of lithium secondary battery>

The electrode assembly prepared as described above was placed inside a prismatic battery case, and then 303.19 g of the electrolyte prepared as described above was injected into the case and sealed to manufacture a lithium secondary battery. In this case, S$_u$, which is a ratio (S$_A$/S$_E$) of the volume (S$_A$) of the electrode assembly and the volume (S$_E$) of the lithium secondary battery in the manufactured lithium secondary battery, was 0.813.

Example 2

<Preparation of electrode assembly>

An electrode assembly was prepared in the same manner as in Example 1.

In this case, the positive electrode had a porosity 21.35% and a loading amount of 4.03 mAh/cm$^2$, and the negative electrode had a porosity of 28.01%. In this case, the positive electrode and the negative electrode are present at an N/P ratio of 107.26, and the electrode assembly has a jelly-roll type in which a positive electrode, a separator, and a negative electrode are sequentially stacked and wound.

<Preparation of electrolyte>

An electrolyte was prepared in the same manner as in Example 1.

<Manufacture of lithium secondary battery>

The electrode assembly prepared as described above was placed inside a prismatic battery case, and then 297.87 g of the electrolyte prepared as described above was injected into the case and sealed to manufacture a lithium secondary battery. In this case, S$_u$, which is a ratio (S$_A$/S$_E$) of the volume (S$_A$) of the electrode assembly and the volume (S$_E$) of the lithium secondary battery in the manufactured lithium secondary battery, was 0.813.

Example 3

<Preparation of electrode assembly>

An electrode assembly was prepared in the same manner as in Example 1.

In this case, the positive electrode had a porosity 21.35% and a loading amount of 4.03 mAh/cm$^2$, and the negative electrode had a porosity of 28.01%. In this case, the positive electrode and the negative electrode are present at an N/P ratio of 107.26, and the electrode assembly has a jelly-roll type in which a positive electrode, a separator, and a negative electrode are sequentially stacked and wound.

<Preparation of electrolyte>

An electrolyte was prepared in the same manner as in Example 1.

<Manufacture of lithium secondary battery>

The electrode assembly prepared as described above was placed inside a prismatic battery case, and then 292.55 g of the electrolyte prepared as described above was injected into the case and sealed to manufacture a lithium secondary battery. In this case, $S_u$, which is a ratio ($S_A/S_E$) of the volume ($S_A$) of the electrode assembly and the volume ($S_E$) of the lithium secondary battery in the manufactured lithium secondary battery, was 0.813.

Example 4

<Preparation of electrode assembly>

An electrode assembly was prepared in the same manner as in Example 1, except that a positive electrode active material having a composition of Li[Ni$_{0.62}$Co$_{0.06}$Mn$_{0.32}$]O$_2$ was used.

In this case, the positive electrode had a porosity 21.7% and a loading amount of 4.33 mAh/cm$^2$, and the negative electrode had a porosity of 26.1%. In this case, the positive electrode and the negative electrode are present at an N/P ratio of 107.1, and the electrode assembly has a jelly-roll type in which a positive electrode, a separator, and a negative electrode are sequentially stacked and wound.

<Preparation of electrolyte>

An electrolyte was prepared in the same manner as in Example 1.

<Manufacture of lithium secondary battery>

The electrode assembly prepared as described above was placed inside a prismatic battery case, and then 319.15 g of the electrolyte prepared as described above was injected into the case and sealed to manufacture a lithium secondary battery. In this case, $S_u$, which is a ratio ($S_A/S_E$) of the volume ($S_A$) of the electrode assembly and the volume ($S_E$) of the lithium secondary battery in the manufactured lithium secondary battery, was 0.830.

Example 5

<Preparation of electrode assembly>

An electrode assembly was prepared in the same manner as in Example 1.

In this case, the positive electrode had a porosity 19.1% and a loading amount of 4.28 mAh/cm$^2$, and the negative electrode had a porosity of 24.7%. In this case, the positive electrode and the negative electrode are present at an N/P ratio of 105.9, and the electrode assembly has a jelly-roll type in which a positive electrode, a separator, and a negative electrode are sequentially stacked and wound.

<Preparation of electrolyte>

An electrolyte was prepared in the same manner as in Example 1.

<Manufacture of lithium secondary battery>

The electrode assembly prepared as described above was placed inside a prismatic battery case, and then 319.15 g of the electrolyte prepared as described above was injected into the case and sealed to manufacture a lithium secondary battery. In this case, $S_u$, which is a ratio ($S_A/S_E$) of the volume ($S_A$) of the electrode assembly and the volume ($S_E$) of the lithium secondary battery in the manufactured lithium secondary battery, was 0.820.

Example 6

A lithium secondary battery was manufactured in the same manner as in Example 1, except that, instead of the electrolyte used in Example 1, an electrolyte, which was prepared by dissolving 1.2 M of $LiPF_6$ in an organic solvent containing ethylene carbonate (EC), ethylmethyl carbonate (EMC), and diethyl carbonate (DEC) in a volume ratio of 2:7:1 and then adding, as additives, 0.3 wt% of vinylethylene carbonate (VEC), 0.5 wt% of vinylene carbonate, 0.5 wt% of propane sultone (PS), 1.0 wt% of ethylene sulfate (ESa), 0.8 wt% of lithium difluorophosphate (LiDFP, product name: SLO 7), 0.5 wt% of lithium oxalyl difluoroborate (LiODFB), 0.1 wt% of propargyl 1Himidazole-1-carboxylate (HS02, CAS 83395-38-4), 0.5 wt% of lithium bis(fluorosulfonyl)imide (LiFSI, product name: SL06), 0.5 WNDFID% of fluoroethylene carbonate (FEC), and 0.5 wt% of trimethylsilyl phosphate (TMSPa), was used.

In this case, the positive electrode had a porosity 21.35% and a loading amount of 4.03 mAh/cm$^2$, and the negative electrode had a porosity of 28.01%. In this case, the positive electrode and the negative electrode are present at an N/P ratio of 107.26, and the electrode assembly has a jelly-roll type in which a positive electrode, a separator, and a negative electrode are sequentially stacked and wound.

Comparative Example 1

<Preparation of electrode assembly>

An electrode assembly was prepared in the same manner as in Example 1.

In this case, the positive electrode had a porosity 21.35% and a loading amount of 4.03 mAh/cm$^2$, and the negative electrode had a porosity of 28.01%. In this case, the positive electrode and the negative electrode are present at an N/P ratio of 107.26, and the electrode assembly has a jelly-roll type in which a positive electrode, a separator, and a negative electrode are sequentially stacked and wound.

<Preparation of electrolyte>

An electrolyte was prepared in the same manner as in Example 1.

<Manufacture of lithium secondary battery>

The electrode assembly prepared as described above was placed inside a prismatic battery case, and then 319.15 g of the electrolyte prepared as described above was injected into the case and sealed to manufacture a lithium secondary battery. In this case, $S_u$, which is a ratio ($S_A/S_E$) of the volume ($S_A$) of the electrode assembly and the volume ($S_E$) of the lithium secondary battery in the manufactured lithium secondary battery, was 0.813.

Comparative Example 2

<Preparation of electrode assembly>

An electrode assembly was prepared in the same manner as in Example 1.

In this case, the positive electrode had a porosity 21.35% and a loading amount of 4.03 mAh/cm$^2$, and the negative electrode had a porosity of 28.01%. In this case, the positive electrode and the negative electrode are present at an N/P ratio of 107.26, and the electrode assembly has a jelly-roll type in which a positive electrode, a separator, and a negative electrode are sequentially stacked and wound.

<Preparation of electrolyte>

An electrolyte was prepared in the same manner as in Example 1.

<Manufacture of lithium secondary battery>

The electrode assembly prepared as described above was placed inside a prismatic battery case, and then 276.60 g of the electrolyte prepared as described above was injected into the case and sealed to manufacture a lithium secondary battery. In this case, $S_u$, which is a ratio ($S_A/S_E$) of the volume ($S_A$) of the electrode assembly and the volume ($S_E$) of the lithium secondary battery in the manufactured lithium secondary battery, was 0.813.

Comparative Example 3

<Preparation of electrode assembly>

An electrode assembly was prepared in the same manner as in Example 1, except that a positive electrode active material having a composition of $Li[Ni_{0.65}Co_{0.15}Mn_{0.2}]O_2$ was used.

In this case, the positive electrode had a porosity 24.6% and a loading amount of 4.02 mAh/cm$^2$, and the negative electrode had a porosity of 26.9%. In this case, the positive electrode and the negative electrode are present at an N/P ratio of 108.6, and the electrode assembly has a jelly-roll type in which a positive electrode, a separator, and a negative electrode are sequentially stacked and wound.

<Preparation of electrolyte>

An electrolyte was prepared in the same manner as in Example 1.

<Manufacture of lithium secondary battery>

The electrode assembly prepared as described above was placed inside a prismatic battery case, and then 303.19 g of the electrolyte prepared as described above was injected into the case and sealed to manufacture a lithium secondary battery. In this case, $S_u$, which is a ratio ($S_A/S_E$) of the volume ($S_A$) of the electrode assembly and the volume ($S_E$) of the lithium secondary battery in the manufactured lithium secondary battery, was 0.830.

Experimental Example 1 - Evaluation of EFF index

EFF index defined by Equation 1 below was measured for the lithium secondary batteries manufactured in Examples 1 to 6 and Comparative Examples 1 to 3. The results are shown in Table 1 below.

[Equation 1]

$$EFF = \frac{R_E \times S_U}{N_C}$$

In Equation 1 above, $R_E$ [unit: g] indicates a weight of residual electrolyte contained in a lithium secondary battery after activation, $S_U$ indicates a ratio ($S_A/S_E$) of a volume ($S_A$) of the electrode assembly and a volume ($S_E$) of the lithium secondary battery, and $N_C$ [unit: Ah] indicates a capacity when the lithium secondary battery is discharged from 4.4 V to 2.5 V at 0.33 C at 25 °C.

(1) Measurement of $R_E$

The lithium secondary batteries manufactured in Examples 1 to 6 and Comparative Examples 1 to 3 were each activated by (1) charging the lithium secondary batteries up to an SOC of 3% under a constant current condition of 0.2 C at 55 °C, (2) charging the lithium secondary batteries up to an SOC of 17% under a constant current condition of 1.0 C at 55 °C, and (3) charging the lithium secondary batteries up to an SOC of 60% under a constant current condition of 1.0 C at 55 °C.

Then, after the activation, each lithium secondary battery was disassembled and the weight ($R_E$) of the residual electrolyte was measured. Specifically, the weight ($R_E$) of the residual electrolyte contained in the lithium secondary battery after the activation was measured by (1) measuring a weight ($M_L$) of the activated lithium secondary battery before disassembling the activated lithium secondary battery, (2) disassembling the activated lithium secondary battery to remove an electrolyte present in a battery case, (3) immersing the battery case and the electrode assembly in a dimethyl carbonate solvent to remove the electrolyte present on a surface of the battery case, a surface of the electrode assembly, and internal pores, and then drying the battery case and the electrode assembly, and (4) measuring a weight ($M_C$) of the dried battery case and a weight ($M_A$) of the dried electrode assembly, and then substituting the measured $M_L$, $M_C$, and $M_A$ into Equation A below.

[Equation A]

$$R_E = M_L - M_C - M_A$$

The results are shown in Table 1 below.

(2) Measurement of $N_C$

The lithium secondary batteries manufactured in Examples 1 to 6 and Comparative Examples 1 and 3 were charged up to 4.35 V with a 0.05 C cut under constant current/constant voltage conditions of 0.33 C at 25 °C, and then discharged up to 2.0 V under a constant current condition of 0.33 C for activation.

Thereafter, the lithium secondary batteries were charged up to 4.35 V from 2.5 V at 0.33 C and 25 °C, and then capacity ($N_C$) when the lithium secondary batteries were discharged to 2.5 V from 4.4 V at 0.33 C and 25 °C was measured. The results are shown in Table 1 below.

3) Measurement of $S_U$

For each lithium secondary battery manufactured in Examples 1 to 6 and Comparative Examples 1 to 3, $S_U$ was measured by measuring the volume of the electrode assembly $S_A$ and the volume of the lithium secondary battery $S_E$, and calculating a ratio of $S_A$ and $S_E$ ($S_A/S_E$). $S_A$ and $S_E$ were each measured through the following methods. The results are shown in Table 1 below.

The volume ($S_E$) of the lithium secondary battery was obtained through Equation B below. The volume ($S_E$) of the lithium secondary battery according to Equation B below is obtained by assuming that the lithium secondary battery including the prismatic battery case has a rectangular parallelepiped shape.

$S_E$ = (Thickness of lithium secondary battery) $\times$ (Length of lithium secondary battery) $\times$ (Width of lithium secondary battery)     [Equation B]

In Equation B above, the thickness of the lithium secondary battery indicates a distance measured along a thickness direction of the lithium secondary battery with respect to an external shape of the lithium secondary battery, the length of the lithium secondary battery indicates a distance measured along a length direction of the lithium secondary battery with respect to an external shape of the lithium secondary battery, and the width of the lithium secondary battery indicates a distance measured along a direction perpendicular to the length direction of the lithium secondary battery with respect to an external shape of the lithium secondary battery.

The volume ($S_A$) of the electrode assembly was obtained through Equation C below.

$S_A$ = (volume of positive electrode) + (volume of negative electrode) + (volume of separator)     [Equation C]

In Equation C above, the volume of the positive electrode, the volume of the negative electrode, and the volume of the separator were measured with respect to the external shape of the positive electrode, negative electrode, or separator, without excluding the volume of pores included in the positive electrode, negative electrode, or separator.

[Table 1]

|  | $R_E$ [g] | $S_U$ | $N_C$ [Ah] | $R_E/N_C$ [g/Ah] | EFF Index [g/Ah] |
|---|---|---|---|---|---|
| Example 1 | 285 | 0.813 | 117 | 2.436 | 1. 98 |
| Example 2 | 280 | 0.813 | 117 | 2.393 | 1.95 |
| Example 3 | 275 | 0.813 | 117 | 2.350 | 1. 91 |
| Example 4 | 300 | 0.830 | 133.5 | 2.247 | 1.87 |
| Example 5 | 300 | 0.820 | 127.8 | 2.347 | 1. 92 |
| Example 6 | 285 | 0.813 | 117 | 2.436 | 1. 98 |
| Comparative Example 1 | 300 | 0.813 | 117 | 2.564 | 2.08 |
| Comparative Example 2 | 260 | 0.813 | 117 | 2.222 | 1.81 |

(continued)

|  | $R_E$ [g] | $S_U$ | $N_C$ [Ah] | $R_E/N_C$ [g/Ah] | EFF Index [g/Ah] |
|---|---|---|---|---|---|
| Comparative Example 3 | 285 | 0.830 | 108.5 | 2.627 | 2.18 |

Experimental Example 2: High temperature storage characteristics

The lithium secondary batteries manufactured in Examples 1 to 6 and Comparative Examples 1 to 3 were charged up to an SOC of 100% under CC/CV conditions of 0.33 C at 25 °C, and then stored at 60 °C for 12 weeks to measure capacity retention and resistance increase rate of each lithium secondary battery. A specific measurement method is as follows.

(1) Capacity retention

Before storage for 12 weeks at 60 °C, the lithium secondary batteries manufactured in Examples 1 to 6 and Comparative Examples 1 to 3 were charged up to 4.25 V with 0.05 C cut at CC/CV, 0.33 C and at 25 °C and discharged up to 2.0 V at CC and 0.33 C three times, and then the discharge capacity at the third cycle was measured and taken as the initial discharge capacity.

After the storage for 12 weeks at 60 °C, the lithium secondary batteries manufactured in Examples 1 to 6 and Comparative Examples 1 to 3 were charged up to 4.25 V with 0.05 C cut at CC/CV, 0.33 C and at 25 °C and discharged up to 2.0 V at CC and 0.33 C three times, and then the discharge capacity at the third cycle was measured and taken as the discharge capacity after the storage for 12 weeks at 60 °C.

The initial discharge capacity measured above was compared with the discharge capacity after the storage for 12 weeks at 60 °C, and the capacity retention was evaluated according to the following Equation, and the results are shown in Table 2 below.

Capacity retention (%)=(discharge capacity after storage for 12 weeks at 60°C/initial discharge capacity) $\times$ 100

(2) Resistance increase rate

The lithium secondary batteries manufactured in Examples 1 to 6 and Comparative Examples 1 to 3 were charged up to 4.25 V with a 0.05 C cut at CC/CV, 0.33 C, and 25°C and discharged up to 2.0 V at CC and 0.33 C three times, and then the discharge capacity at the third cycle was set to an SOC of 50% at CC/CV and 0.33 C, and the batteries were discharged for 30 seconds with a current of 2.5 C to measure resistance based on voltage drop difference in that case, which was taken as the initial resistance. Thereafter, the batteries were stored at 60 °C for 12 weeks, and the resistance was measured using the same method, which was taken as the final resistance, and the resistance increase rate was calculated using the following Equation. The results are shown in Table 2 below.

Resistance increase rate (%) = (final resistance - initial resistance)/(initial resistance) $\times$ 100

[Table 2]

|  | Capacity retention [%] | Resistance increase rate [%] |
|---|---|---|
| Example 1 | 95.89 | 19.77 |
| Example 2 | 96.26 | 17.15 |
| Example 3 | 96.26 | 16.25 |
| Example 4 | 94.66 | 23.65 |
| Example 5 | 94.77 | 24.89 |
| Example 6 | 95.50 | 22.31 |
| Comparative Example 1 | 93.23 | 32.34 |
| Comparative Example 2 | 93.52 | 25.47 |
| Comparative Example 3 | 94.11 | 26.84 |

Referring to Table 2 above, the lithium secondary batteries manufactured in Examples 1 to 6 were found to be superior to the lithium secondary batteries manufactured in Comparative Examples 1 to 3 in capacity retention and resistance increase rate after 12 weeks of storage at 60 °C. In addition, despite using a different electrolyte than Example 1, Example 6 showed superior capacity retention and resistance increase after 12 weeks of storage at 60 °C compared to the lithium secondary batteries manufactured in Comparative Examples 1-3, and accordingly, it is understood that even when different electrolytes are applied, excellent high-temperature storage characteristics may be achieved if the EFF value defined by Equation 1 above satisfies 1.82 to 2.06.

**Claims**

1.  A lithium secondary battery comprising:

    an electrode assembly comprising a positive electrode, a negative electrode, and a separator placed between the positive electrode and the negative electrode;
    an electrolyte; and
    a battery case comprising an internal space for accommodating the electrode assembly and the electrolyte,
    wherein the positive electrode comprises a positive electrode active material,
    the positive electrode active material comprises a lithium nickel-based oxide containing 50 mol% to 70 mol% of nickel among all metals excluding lithium, and
    an electrolyte filing factor (EFF) index (unit: g/Ah) defined by Equation 1 below is 1.82 to 2.06,

    [Equation 1]

    $$EFF = \frac{R_E \times S_U}{N_C}$$

    wherein in Equation 1 above,
    $R_E$ [unit: g] indicates a weight of residual electrolyte contained in a lithium secondary battery after activation,
    $S_U$ indicates a ratio ($S_A/S_E$) of a volume ($S_A$) of the electrode assembly and a volume ($S_E$) of the lithium secondary battery, and
    $N_C$ [unit: Ah] indicates a capacity when the lithium secondary battery is discharged from 4.4 V to 2.5 V at 0.33 C at 25 °C.

2.  The lithium secondary battery of claim 1, wherein the $R_E$ is 265 to 295 g.

3.  The lithium secondary battery of claim 1, wherein the $S_U$ is 0.70 to 0.95.

4.  The lithium secondary battery of claim 1, wherein the $N_C$ is 90 to 150 Ah.

5.  The lithium secondary battery of claim 1, wherein a ratio ($R_E/N_C$) [unit: g/Ah] of the $R_E$ to the $N_C$ is 2.00 to 3.30.

6.  The lithium secondary battery of claim 1, wherein the volume ($S_A$) of the electrode assembly is 0.3 L to 1.35 L.

7.  The lithium secondary battery of claim 1, wherein the volume ($S_E$) of the lithium secondary battery is 0.4 L to 1.5 L.

8.  The lithium secondary battery of claim 1, wherein the lithium nickel-based oxide contains 15 mol% of cobalt (Co) or less among all metals except lithium.

9.  The lithium secondary battery of claim 1, wherein the lithium nickel-based oxide is represented by Formula 1 below:

    [Formula 1]          $Li_{1+a1}[Ni_{x1}Co_{y1}Mn_{z1}M^1_{w1}]O_2$

    wherein in Formula 1 above,

$0 \leq a1 \leq 0.5$, $0.5 \leq x1 \leq 0.7$, $0 < y1 \leq 0.15$, $0 < z1 \leq 0.4$, and $0 \leq w1 \leq 0.2$ are satisfied, and
$M^1$ is at least one doping element selected from W, Cu, Fe, V, Cr, Ti, Zr, Zn, Al, In, Ta, Y, La, Sr, Ga, Sc, Gd, Sm, Ca, Ce, Nb, Mg, B, and Mo.

10. The lithium secondary battery of claim 1, wherein the lithium nickel-based oxide is a single particle type particle.

11. The lithium secondary battery of claim 1, wherein the lithium secondary battery has a charge cut-off voltage of 4.3 V or greater.

12. The lithium secondary battery of claim 1, wherein the lithium secondary battery has a nominal voltage of 3.68 V or greater.

13. The lithium secondary battery of claim 1, wherein the negative electrode comprises graphite as a negative electrode active material.

14. The lithium secondary battery of claim 1, wherein the battery case is a prismatic battery case.

15. The lithium secondary battery of claim 1, wherein the electrode assembly is formed in which a positive electrode, a separator, and a negative electrode are sequentially stacked and wound in one direction.

**EP 4 746 103 A1**

## INTERNATIONAL SEARCH REPORT

| International application No. |
|---|
| **PCT/KR2025/001357** |

| A. | CLASSIFICATION OF SUBJECT MATTER |
|---|---|

**H01M 10/058**(2010.01)i; **H01M 4/525**(2010.01)i; **H01M 4/505**(2010.01)i; **H01M 4/583**(2010.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 10/058(2010.01); C01G 53/00(2006.01); H01M 10/04(2006.01); H01M 2/02(2006.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지 (lithium secondary battery), 니켈 (nickel), 전해액 충전 지수 (EFF, electrolyte filling factor), 활성화 (activation, formation), 부피 (volume)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2016-0079724 A (LG CHEM, LTD.) 06 July 2016 (2016-07-06)<br>See claims 1, 3 and 8; and paragraphs [0040], [0057] and [0109]. | 1-15 |
| Y | 윤별희 등. 액체전해액의 함량에 따른 리튬이온전지 코인셀의 전기화학적 특성 연구<br>. 전기화학회지. 2018, vol. 21, no. 2, pp. 39-46 (YOON, Byeolhee et al. Effect of Electrolyte Amounts on Electrochemical Properties of Coin-Type Lithium-Ion Cells. Journal of the Korean Electrochemical Society.)<br>See page 41, 2.2 Unit Cell Manufacturing and table 1. | 1-15 |
| Y | ZHANG, Z. et al. A low cost single-crystalline LiNi0.60Co0.10Mn0.30O2 layered cathode enables remarkable cycling performance of lithium-ion batteries at elevated temperature. Journal of Power Sources. 2021, vol. 503, Article No. 230028.<br>See abstract, and 2.2. Electrode preparation and 3.2. Electrochemical analysis and comparisons. | 10-12 |
| A | JP 7214299 B2 (LG ENERGY SOLUTION, LTD.) 30 January 2023 (2023-01-30)<br>See paragraphs [0090] and [0108]. | 1-15 |

| ✓ Further documents are listed in the continuation of Box C. | ✓ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 May 2025** | **07 May 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2025/001357** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 7309258 B2 (LG ENERGY SOLUTION, LTD.) 18 July 2023 (2023-07-18)<br>See paragraphs [0081] and [0116]. | 1-15 |

Form PCT/ISA/210 (second sheet) (July 2022)

**INTERNATIONAL SEARCH REPORT**
Information on patent family members

International application No.

**PCT/KR2025/001357**

| Patent document cited in search report | | | Publication date (day/month/year) | Patent family member(s) | | | Publication date (day/month/year) |
|---|---|---|---|---|---|---|---|
| KR | 10-2016-0079724 | A | 06 July 2016 | KR | 10-1803528 | B1 | 30 November 2017 |
| JP | 7214299 | B2 | 30 January 2023 | CN | 113646930 | A | 12 November 2021 |
| | | | | CN | 113646930 | B | 13 September 2024 |
| | | | | EP | 3869595 | A1 | 25 August 2021 |
| | | | | JP | 2022-510653 | A | 27 January 2022 |
| | | | | KR | 10-2020-0067009 | A | 11 June 2020 |
| | | | | KR | 10-2533811 | B1 | 19 May 2023 |
| | | | | US | 12046750 | B2 | 23 July 2024 |
| | | | | US | 2022-0020983 | A1 | 20 January 2022 |
| | | | | WO | 2020-116858 | A1 | 11 June 2020 |
| JP | 7309258 | B2 | 18 July 2023 | CN | 114051666 | A | 15 February 2022 |
| | | | | CN | 114051666 | B | 16 April 2024 |
| | | | | EP | 3975305 | A1 | 30 March 2022 |
| | | | | JP | 2022-531337 | A | 06 July 2022 |
| | | | | KR | 10-2021-0011245 | A | 01 February 2021 |
| | | | | US | 2022-0255150 | A1 | 11 August 2022 |
| | | | | WO | 2021-015488 | A1 | 28 January 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240016255

**Non-patent literature cited in the description**

- *CHEMICAL ABSTRACTS*, 83395-38-4